(19) Europäisches Patentamt
European Patent Office
Office européen des brevets

(11) **EP 2 066 996 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(21) Anmeldenummer: **07725095.9**

(22) Anmeldetag: **11.05.2007**

(51) Int Cl.:
**G01B 5/00** *(2006.01)*   **G01D 5/34** *(2006.01)*

(86) Internationale Anmeldenummer:
**PCT/EP2007/004175**

(87) Internationale Veröffentlichungsnummer:
**WO 2008/034475 (27.03.2008 Gazette 2008/13)**

(54) **POSITIONIEREINRICHTUNG IN PORTALBAUWEISE**

POSITIONING DEVICE IN GANTRY DESIGN

DISPOSITIF DE POSITIONNEMENT À STRUCTURE EN PORTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.09.2006 DE 102006044358**

(43) Veröffentlichungstag der Anmeldung:
**10.06.2009 Patentblatt 2009/24**

(73) Patentinhaber: **ETEL S. A..**
**2112 Môtiers (CH)**

(72) Erfinder:
• **COLEMAN, Ralph**
**CH-2114 Fleurier (CH)**
• **HEINIGER, Laurent**
**CH-2052 Fontainemelon (CH)**

(74) Vertreter: **Pleyer, Hans Anno**
**Dr. Johannes Heidenhain GmbH**
**Patentabteilung**
**Postfach 12 60**
**83292 Traunreut (DE)**

(56) Entgegenhaltungen:
**US-A1- 2004 178 327**

**Beschreibung**

Die Erfindung betrifft eine Positioniereinrichtung in Portalbauweise. Solche Positioniereinrichtungen finden in vielen Gebieten der Technik Anwendung.

Positioniereinrichtungen in Portalbauweise, bei denen zwischen zwei parallelen Linearführungen ein Querbalken beweglich gelagert ist, auf welchem mittels einer weiteren Linearführung ein Funktionselement beweglich gelagert ist, so dass dieses Funktionselement in einer Ebene zwischen den beiden parallelen Linearführungen frei positionierbar ist, sind seit langem Stand der Technik. Als Funktionselement kommt beispielsweise ein Greifer eines Bestückungsautomaten, ein Laser eines Laser - Bearbeitungszentrums oder auch ein Tastsystem einer Koordinatenmessmaschine in Frage.

In allen diesen Anwendungen, von denen es für Positioniereinrichtungen in Portalbauweise noch einige mehr gibt, spielt die möglichst genaue Positionierung des Funktionselements eine entscheidende Rolle. Daher wird oft ein großer Aufwand betrieben, um mit möglichst genauen Positionsmessgeräten das Funktionselement möglichst genau zu positionieren.

Positionsmessgeräte bestehend aus Maßstäben mit zugeordneten Abtastköpfen beruhen auf der Abtastung von periodischen Strukturen auf dem Maßstab. Bewegen sich Maßstab und Abtastkopf relativ zueinander, erzeugt der Abtastkopf periodische Signale, aus denen sich die relative Verschiebung ableiten lässt. Die Strukturen auf dem Maßstab lassen sich dabei auch so ausführen, dass eine absolute Positionsinformation ablesbar ist. Dies gelingt entweder mit Referenzmarken oder mit absolut codierten Spuren auf dem Maßstab. Solche Positionsmessgeräte werden im Gebiet der Positioniereinrichtungen umfangreich eingesetzt, so dass sich eine genauere Beschreibung der Funktionsweise erübrigt.

Es empfehlen sowohl die EP 0 082 441 A2 als auch die US 6,949,733 B2 für Positioniereinrichtungen in Portalbauweise den Einsatz von Positionsmessgeräten, die auf der Abtastung von auf einem Maßstab angeordneten Teilungen beruhen. Die Maßstäbe tragen dabei neben der üblichen Inkrementalspur mit sehr vielen, quer zur Messrichtung angeordneten Teilungsstrichen (im Folgenden als Messspur bezeichnet) auch noch eine zusätzliche Messstruktur mit wenigen, dafür aber über die ganze Messlänge erstreckten Teilungsstrichen in Messrichtung (im Folgenden als Geradheitsspur bezeichnet). Wegen der Möglichkeit, von dieser Geradheitsspur kleine Positionsabweichungen quer zur eigentlichen Messrichtung abzuleiten, werden solche Maßstäbe auch als 1D+ - Maßstäbe bezeichnet. In beiden zitierten Dokumenten aus dem Stand der Technik werden solche 1 D+ - Maßstäbe dazu verwendet, Führungsfehler und Verkippungen zu messen und bei der Positionierung zu berücksichtigen. Dabei werden zum Teil auch solche Fehler berücksichtigt, die durch thermische Ausdehnung von einzelnen Bestandteilen der Positioniereinrichtung zustande kommen. Mit keiner der in diesen Dokumenten gezeigten Anordnungen ist es aber möglich, die thermische Ausdehnung des Querbalkens vollständig zu erfassen und zu kompensieren. Gerade dieser Querbalken ist aber üblicherweise besonders von solchen Ausdehnungen betroffen, wenn z.B. die Querachse mit einem auf dem Querbalken angeordneten Linearmotor angetrieben wird, dessen Abwärme den Querbalken erwärmt.

Der Querbalken mit Linearführung wird im Folgenden auch als Querführung bezeichnet.

1D+ - Maßstäbe und darauf beruhende Messgeräte sind näher in der nicht vorveröffentlichten deutschen Patentanmeldung mit dem Aktenzeichen 10 2005 023 984.6 beschrieben.

Aus der DE 42 12 970 A1 ist es außerdem bekannt, dass es zur Kompensation thermischer Ausdehnungen beim Messen einer Position wichtig ist, den Fixpunkt eines ansonsten schwimmend, also auf seiner Unterlage mittels einer flexiblen Klebeschicht beweglich befestigten Maßstabes geschickt zu wählen. An diesem Fixpunkt ist der Maßstab fest mit seinem Träger verbunden, so dass der Maßstab bei thermischer Verlagerung dieses Fixpunktes mitbewegt wird.

US2004/178327A offenbart auch eine Positioniereirichung in Portalbanweise.

Aufgabe der Erfindung ist es, eine Positioniereinrichtung in Portalbauweise anzugeben, bei der der Einfluss der thermischen Ausdehnung der Querführung auf die Positionierung des Funktionselements erfasst und kompensiert werden kann.

Diese Aufgabe wird gelöst durch eine Vorrichtung mit den Merkmalen der Ansprüche 1 oder 2 Vorteilhafte Ausführungsformen ergeben sich aus den Merkmalen, die in den von Ansprüche 1 oder 2 abhängigen Ansprüchen aufgeführt sind.

Es wird eine Positioniereinrichtung in Portalbauweise beschrieben,

- mit zwei in einer ersten Richtung erstreckten, parallelen Linearführungen, die jeweils einen X-Laufwagen in der ersten Richtung verschiebbar halten,

- mit einer im Wesentlichen in einer zur ersten Richtung senkrecht stehenden zweiten Richtung erstreckten Querführung, die an den beiden X-Laufwagen befestigt ist und einen Y-Laufwagen in der zweiten Richtung verschiebbar hält,

- wodurch ein am Y-Laufwagen befestigtes Funktionselement in einem Arbeitsbereich zwischen den beiden in der ersten Richtung erstreckten Linearführungen positionierbar ist,

- mit wenigstens einem X-Positionsmessgerät mit einem Maßstab und einem zugeordneten Abtastkopf zum Bestimmen der Lage der Querführung in der ersten Richtung,

- mit einem Y-Positionsmessgerät mit einem Maßstab und einem zugeordneten Abtastkopf zum Bestimmen der Lage des Y-Laufwagens auf der Querführung, wobei der Maßstab des Y-Positionsmessgerätes an der Querführung und der zugeordnete Abtastkopf am Y-Laufwagen befestigt ist,

- mit einem in der ersten Richtung längserstreckten Maßstab, der eine Geradheitsspur aufweist, zur Messung von Verlagerungen der Querführung in der zweiten Richtung anhand eines an der Querführung befestigten Abtastkopfes zur Abtastung der Geradheitsspur, wobei

- der Maßstab des Y-Positionsmessgerätes mit der Querführung so verbunden ist, dass er an einem Fixpunkt bezüglich der zweiten Richtung fest mit der Querführung verbunden ist,

- und dieser Maßstab des Y-Positionsmessgerätes ansonsten bzgl. der zweiten Richtung schwimmend mit der Querführung verbunden ist,

- und der Fixpunkt bezüglich der ersten und zweiten Richtung senkrecht versetzt zur Geradheitsspur liegt,

- so dass eine thermische Verlagerung des Fixpunktes durch die Abtastung der Geradheitsspur vollständig erfasst wird.

Der in der ersten Richtung längserstreckte Maßstab mit Geradheitsspur kann dabei ebenso wie sein zugeordneter Abtastkopf real oder virtuell ausgebildet sein. Virtuell ausgebildet bedeutet dabei, dass von zwei realen Positionsmessgeräten mit je einem Maßstab mit Geradheitsspur und zugehörigem Abtastkopf Positionswerte abgeleitet und zu einem einzigen Positionswert verbunden werden, der dann als Messwert des virtuellen Positionsmessgeräts verwendet werden kann.

Mit einer solchen Anordnung der Positionsmessgeräte an der Positioniereinrichtung in Portalbauweise lässt sich die Auswirkung der thermischen Ausdehnung der Querführung auf die Positionierung des Funktionselements erfassen und kompensieren.

Weitere Vorteile sowie Einzelheiten der vorliegenden Erfindung ergeben sich aus der nachfolgenden Beschreibung bevorzugter Ausführungsformen anhand der Figuren. Dabei zeigt

Figur 1      eine erste Positioniereinrichtung in der Draufsicht,

Figur 2      die erste Positioniereinrichtung in einer Seitenansicht,

Figur 3      eine zweite Positioniereinrichtung in einer Draufsicht.

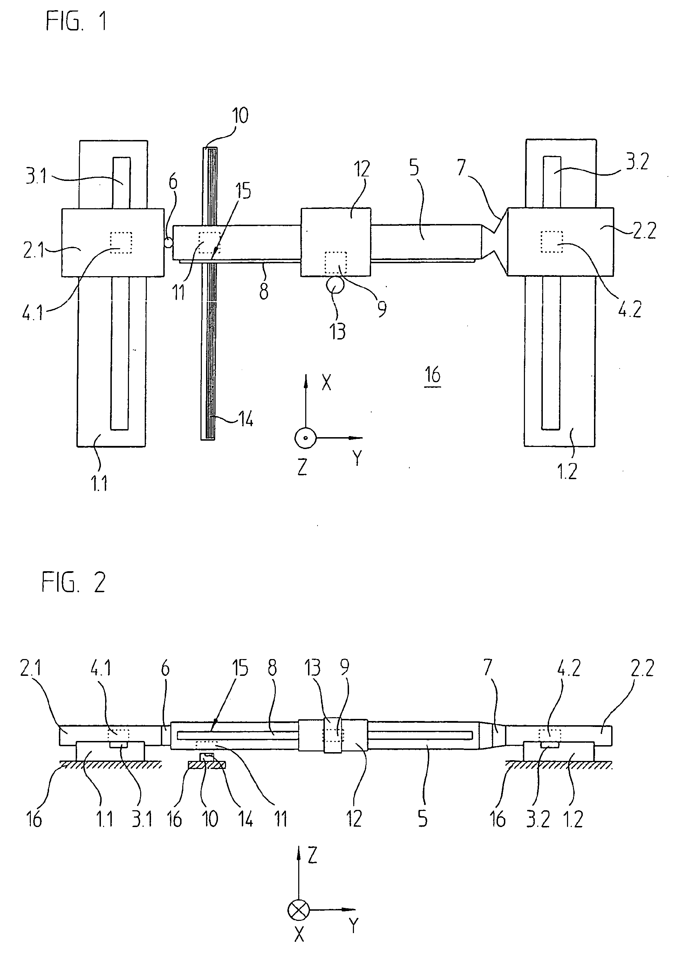

Figur 1 zeigt eine erste Positioniereinrichtung in Portalbauweise. Zwei in einer ersten Richtung X erstreckte, parallel zueinander angeordnete Linearführungen 1.1, 1.2, halten jeweils einen Laufwagen 2.1, 2.2 in der ersten Richtung X verschiebbar. Um die Laufwagen 1.1, 1.2 sprachlich von anderen Laufwagen unterscheiden zu können, werden diese im Folgenden auch als X-Laufwagen 2.1, 2.2 bezeichnet.

Zwischen den beiden X-Laufwagen 1.1 und 1.2 ist eine Querführung 5 angeordnet, die sich im Wesentlichen senkrecht zur ersten Richtung X in einer zweiten Richtung Y erstreckt. Auf dieser Querführung 5 ist ein weiterer Laufwagen 12 in der zweiten Richtung Y verschiebbar gehalten, weswegen dieser zweite Laufwagen 12 im Folgenden auch als Y-Laufwagen 12 bezeichnet wird.

Die Querführung 5 ist an einem der beiden X-Laufwagen 2.1 über ein Gelenk 6 verbunden, das nur ein Schwenken um die Z-Achse des Gelenks erlaubt, aber keine Bewegung in der zweiten Richtung Y. Eine flexible Ankopplung 7 der Querführung 5 am zweiten X-Laufwagen 2.2 erlaubt dagegen eine solche Bewegung in der zweiten Richtung Y.

Ein am Y-Laufwagen 12 befestigtes Funktionselement 13 ist so in einem Arbeitsbereich zwischen den beiden in der ersten Richtung erstreckten Linearführungen 1.1, 1.2 positionierbar.

Als Funktionselement 13 können verschiedenste Mittel zum Einsatz kommen. Neben Werkzeugen zum Greifen, Bearbeiten oder Messen kann es sich dabei auch um einen auf dem Y-Laufwagen 12 befestigten Tisch handeln, mit dessen Hilfe ein zu bearbeitendes Objekt positioniert wird. Eine weitere Achse in einer dritten Richtung Z kann dazu dienen, das Funktionselement senkrecht zur X - Y - Bearbeitungsebene zu bewegen.

Um das Funktionselement 13 exakt positionieren können, sind verschiedene Positionsmessgeräte in den beiden Richtungen X, Y nötig. Nach der jeweiligen Messrichtung wird dabei im Folgenden zwischen X-Positionsmessgeräten und Y-Positionsmessgeräten unterschieden.

In der Figur 1 sind zwei X-Positionsmessgeräte gezeigt, die jeweils aus an den Linearführungen 1.1 und 1.2 angebrachten Maßstäben 3.1 und 3.2 sowie den Maßstäben 3.1 und 3.2 zugeordneten Abtastköpfen 4.1 und 4.2 bestehen. Die Abtastköpfe 4.1, 4.2 sind in die X-Laufwagen 2.1, 2.2 integriert. Die beiden X-Positionsmessgeräte dienen der Bestimmung der Lage der beiden X-Laufwagen 2.1, 2.2 und damit zum Bestimmen der Lage der Querführung 5, die ja an den beiden X-Laufwagen 2.1, 2.2 befestigt ist.

Zwischen der Querführung 5 und dem Y-Laufwagen 12 ist ein weiteres Positionsmessgerät angebaut, das zum Bestimmen der Lage des Y-Laufwagens in der zweiten Richtung Y dient. Dieses im Folgenden auch als Y-Positionsmessgerät bezeichnete Messgerät besteht aus einem an der Querführung 5 befestigten Maßstab 8 und einem im Y-Laufwagen 12 integrierten Abtastkopf 9 zur Abtastung des Maßstabes 8.

Regelt man die Positionen der X-Laufwagen 2.1, 2.2 und damit der Querführung 5 und des Y-Laufwagens 12 mit entsprechenden Reglern, so lässt sich der Y-Laufwagen 12 und damit das Funktionselement 13 in jede gewünschte Sollposition innerhalb des Arbeitsbereiches verfahren. Hierzu sind in den Linearführungen 1.1 und 1.2 und in der Querführung 5 vorzugsweise nicht näher dargestellte Linearmotoren als Antrieb integriert oder angebaut.

Ein weiterer Maßstab 10, der in der ersten Richtung X längserstreckt parallel zu und zwischen den Linearführungen 1.1, 1.2 angeordnet ist, trägt eine Geradheitsspur 14 zur Messung von Verlagerungen der Querführung 5 in der zweiten Richtung Y. Hierzu ist ein entsprechender Abtastkopf 11 zur Abtastung der Geradheitsspur 14 an der Querführung 5 befestigt. Der Maßstab 10 selbst ist mit dem Maschinenbett 16 verbunden und damit am "thermischen Nullpunkt" der Positioniereinrichtung angeordnet.

Es sei an dieser Stelle erwähnt, dass zur Messung der Position der Querführung 5 in der ersten Richtung X mindestens ein X-Positionsmessgerät vorhanden sein muss. Jeder der drei in der Figur 1 dargestellten, in der ersten Richtung X erstreckten Maßstäbe 3.1, 3.2, 10 kann zu diesem Zweck dienen, wenn er eine entsprechende Spur trägt. Insbesondere könnte der Maßstab 10 zusätzlich zu seiner Geradheitsspur 14 eine Messspur für die erste Messrichtung X tragen. Bei diesem Maßstab 10 würde es sich dann um einen oben beschriebenen 1D+ - Maßstab handeln. Mit weicher Konfiguration die Position der Querführung 5 in der ersten Richtung X gemessen wird, hängt letztlich von den konkreten Gegebenheiten und Anforderungen ab, und ist insbesondere für die vorliegende Erfindung nicht wesentlich. Zur Verwirklichung der Erfindung ist ausschließlich die Geradheitsspur 14 des Maßstabes 10 entscheidend.

Der Maßstab 8 des Y-Messgerätes ist an der Querführung 5 so befestigt, dass er an einem Fixpunkt 15 bezüglich der zweiten Richtung Y fest mit der Querführung 5 verbunden ist. Ansonsten ist dieser Maßstab 8 in der zweiten Richtung Y "schwimmend", also z.B. über eine flexible Klebeschicht an der Querführung gehalten. Dies bewirkt, dass der Maßstab 8 als Ganzes mit dem Fixpunkt 15 mitbewegt wird, falls dieser z.B. durch thermische Ausdehnung der Querführung 5 gegenüber dem Maschinenbett 16 verschoben wird. Der Maßstab 8 selbst, der in diesem Ausführungsbeispiel aus einem Material mit vernachlässigbarem Ausdehnungskoeffizient (wie z.B. Zerodur) besteht, ändert seine Länge nicht. Dank der schwimmenden Befestigung entstehen keine Spannungen zwischen der Querführung 5 und dem Maßstab 8.

Um nun die Auswirkung von thermischen Längenänderungen der Querführung 5 vollständig kompensieren zu können, wird der Fixpunkt 15 so gelegt, dass er in der Draufsicht der Figur 1 mit der Geradheitsspur 14 zusammenfällt, unabhängig von der Position des Querbalkens 5 in der ersten Richtung X. Der Fixpunkt 15 und die Geradheitsspur 14 weisen nämlich in einem maschinenbezogenen Koordinatensystem X, Y, Z die selbe Y-Position auf, während die Z - Koordinate unterschiedlich ist. Die Geradheitsspur 14 erstreckt sich in der ersten Richtung X so weit, dass jede mögliche X-Position der Querführung 5 und damit des Abtastkopfes 11 abgedeckt ist. In der Figur 1 liegt der Fixpunkt 15 bezüglich der ersten und zweiten Richtungen X, Y senkrecht oberhalb der Geradheitsspur. Ein durch den Fixpunkt 15 auf eine durch die erste und zweite Richtung X, Y aufgespannte Ebene gefälltes Lot schneidet die Geradheitsspur 14, unabhängig von der X-Position und der thermischen Ausdehnung der Querführung 5.

Mit dieser Anordnung von Fixpunkt 15 und Geradheitsspur 14 ist sichergestellt, dass das vom Abtastkopf 11 von der Geradheitsspur 14 abgetastete Positionssignal exakt die Verlagerung des Fixpunktes 15 wiedergibt. Da sich der Maßstab 8 des Y-Positionsmessgerätes selbst nicht ausdehnt, genügt es, die Messung des Y-Positionsmessgerätes um den von der Geradheitsspur 14 abgetasteten Wert der Verlagerung des Fixpunktes 15 zu korrigieren, um einen korrigierten, von allen (also auch von thermischen) Verlagerungen der Querführung 5 gegenüber dem Maschinenbett 16 freien Positionswert in der zweiten Richtung Y zu erhalten. Unabhängig von einer Erwärmung der Querführung 5 lässt sich so der Y-Laufwagen relativ zum Maschinenbett exakt positionieren.

Figur 2 ist eine Seitenansicht der in Figur 1 dargstellten Positioniereinrichtung, mit der noch einmal die Anordnung des thermischen Fixpunktes 15 oberhalb der Geradheitsspur 14 verdeutlicht werden soll. Dabei bedeutet "oberhalb" eine unterschiedliche Z-Koordinate bei übereinstimmenden X-und Y-Koordinaten. Der Fixpunkt 14 liegt damit bezüglich der ersten und zweiten Richtung X, Y senkrecht versetzt zur Geradheitsspur 14. Wie in Figur 1 und 2 zu erkennen ist, liegt auch der Abtastkopf 11 zur Abtastung der Geradheitsspur 14 bezüglich der ersten und zweiten Richtung X, Y senkrecht versetzt zur Geradheitsspur 14, wobei dieser Abtastkopf 11 und der Fixpunkt 15 durchaus sowohl in der ersten Richtung X als auch in der dritten Richtung Z zueinander versetzt sein können.

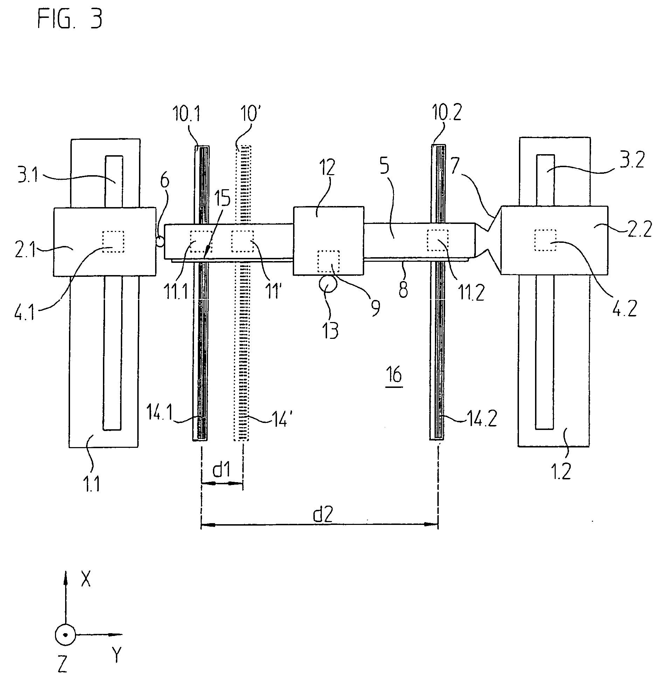

Figur 3 stellt eine weitere Möglichkeit dar, die gestellte Aufgabe unter Einsatz von Maßstäben mit Geradheitsspuren zu lösen. Der Aufbau der Positioniereinrichtung stimmt weitgehend mit dem in der Figur 1 dargestellten Aufbau überein. Gleiche Bestandteile sind daher mit den gleichen Bezugszeichen benannt.

Gemäß diesem Ausführungsbeispiel gibt es zwei Maßstäbe 10.1 und 10.2 mit je einer Geradheitsspur 14.1, 14.2, die jeweils von an der Querführung 5 befestigten Abtastköpfen 11.1, 11.2 abgetastet werden. Die beiden Maßstäbe 10.1, 10.2 sind wieder parallel zu und zwischen den beiden Linearführungen 1.1 und 1.2 längserstreckt.

Somit besteht nun die Möglichkeit, die thermischen Verlagerungen der Querführung 5 an zwei in der zweiten Richtung Y beabstandeten Stellen zu erfassen.

Die Bewegung des Fixpunktes 15, an dem der Maßstab 8 mit der Querführung 5 verbunden ist, kann zwar nicht direkt gemessen werden, da der Fixpunkt 15 nun nicht wie im ersten Ausführungsbeispiel oberhalb einer der Geradheitsspuren 14.1, 14.2 angeordnet ist. Aus den Messungen an den beiden Geradheitsspuren 14.1, 14.2 kann aber diese Bewegung des Fixpunktes 15 abgeleitet werden.

Die beiden Maßstäbe 10.1, 10.2 mit den Geradheitsspuren 14.1, 14.2 werden dabei dazu verwendet, einen Messwert eines virtuellen Positionsmessgeräts zu berechnen, dessen virtuelle Geradheitsspur 14' ganz wie im ersten Ausführungsbeispiel unterhalb des Fixpunktes 15 liegt, und das damit wieder den Versatz des Fixpunktes 15 liefert. Eine solche Anordnung, bei der aus zwei Positionsmessgeräten ein Messwert eines einzigen, virtuellen Positionsmessgeräts abgeleitet wird, wird auch als "Phantom - Scale" Anordnung bezeichnet. Der so berücksichtigte virtuelle Maßstab 10' und dessen virtueller Abtastkopf 11' entspricht dem real existierenden Maßstab 10 und dem real existierenden Abtastkopf 11 der Figuren 1 und 2. Das erste und zweite Ausführungsbeispiel sind damit äquivalent.

Für den vom virtuellen Maßstab 10' bzw. von dessen virtueller Geradheitsspur 14' abgeleiteten Positionswert und damit für die zu korrigierende Verlagerung dy des Fixpunktes 15 gilt:

$$dy = y1 * ( 1 - d1/d2 ) + y2 * d1 / d2$$

wobei y1 und y2 die beiden von den Abtastköpfen 11.1 und 11.2 abgeleiteten Verlagerungen der Querführung 5 in der zweiten Richtung Y sind, d1 der Abstand des Fixpunktes 15 von der Geradheitsspur 14.1 ist, von dem y1 abgeleitet wurde, und d2 der Abstand der beiden Geradheitsspuren 14.1 und 14.2 ist. Der zu korrigierende Versatz dy ist damit ein gewichtetes Mittel aus den beiden von den Maßstäben 10.1, 10.2 abgelesenen Verschiebungen y1, y2.

Die korrigierte Position des Y-Laufwagens 12 ist dann die vom Maßstab 8 mittels des Abtastkopfes 9 abgelesene Position, abzüglich der Verlagerung dy des Fixpunktes 15.

Die oben angegebene Formel für dy gilt dann, wenn sich die Querführung 5 hinreichend gleichmäßig über ihre ganze Länge ausdehnt bzw. sich über ihre ganze Länge gleichmäßig erwärmt. Für eine aus Aluminium gefertigte Querführung 5 gilt diese Annahme wegen der guten Wärmeleitfähigkeit von Aluminium recht gut.

Sind die beiden Maßstäbe 10.1 und 10.2 als 1D+ - Maßstäbe ausgeführt, weisen sie also zusätzlich zu den Geradheitsspuren 14.1 und 14.2 noch Messspuren für die erste Richtung X auf, so können diese Maßstäbe 10.1 und 10.2 die an den Linearführungen 1.1, 1.2 angebrachten Maßstäbe 3.1, 3.2 vollständig ersetzen. Die Zahl der in die erste Richtung X erstreckten Maßstäbe lässt sich so gegenüber dem ersten Ausführungsbeispiel verringern, wobei dennoch alle benötigten Informationen zur Verfügung stehen.

Insbesondere kann wie auch im ersten Ausführungsbeispiel eine leichte Verkippung der Querführung 5 um die Drehachse 6 erfasst und auf einen gewünschten Wert eingestellt werden. Eine solche Verkippung um wenige Grad (begrenzt durch die flexible Ankopplung 7) kann evtl. sogar vorteilhaft sein, etwa wenn das Funktionselement 13 ein Tisch ist, auf dem ein Objekt einerseits in der ersten und zweiten Richtung positionierbar ist, und als weiterer Freiheitsgrad eine Drehung um wenige Grad einstellbar ist. So kann beispielsweise ein auf dem Tisch verdreht abgelegter Siliziumwafer bezüglich der ersten und zweiten Richtung X, Y ausgerichtet werden.

Wird eine Positioniereinrichtung der hier beschriebenen Art eingeschaltet, so muss zunächst festgestellt werden, wo sich der Fixpunkt 15 relativ zur Geradheitsspur 14 aktuell befindet. Ein beim letzten Ausschalten gespeicherter Wert stimmt möglicherweise nicht mehr, da sich die Temperatur der Querführung 5 verändert haben kann. Hierzu kann entweder mit dem Funktionselement 13 ein Referenzpunkt angefahren werden, oder es kommen schräge Referenzmarken zusätzlich zur Geradheitsspur 14, 14.1, 14.2, 14' zur Anwendung, wie es in der eingangs genannten nicht vorveröffentlichten deutschen Patentanmeldung 10 2005 984.6 beschrieben ist. Solche Referenzmarken erlauben es, die aktuelle Lage des Fixpunktes 15 direkt auszulesen.

**Patentansprüche**

1. Positioniereinrichtung in Portalbauweise,

     - mit zwei in einer ersten Richtung (X) erstreckten, parallelen Linearführungen (1.1, 1.2), die jeweils einen X-Laufwagen (2.1, 2.2) in der ersten Richtung (X) verschiebbar halten,
     - mit einer im Wesentlichen in einer zur ersten Richtung senkrecht stehenden zweiten Richtung (Y) erstreckten Querführung (5), die an den beiden X-Laufwagen (2.1, 2.2) befestigt ist und einen Y-Laufwagen (12) in der zweiten Richtung (Y) verschiebbar hält,
     - wodurch ein am Y-Laufwagen (12) befestigtes Funktionselement (13) in einem Arbeitsbereich zwischen den beiden in der ersten Richtung (X) erstreckten Linearführungen (1.1, 1.2) positionierbar ist,
     - mit wenigstens einem X-Positionsmessgerät mit einem Maßstab (3.1, 3.2, 10) und einem zugeordneten Abtastkopf (4.1, 4.2, 11) zum Bestimmen der Lage der Querführung (5) in der ersten Richtung (X),

- mit einem Y-Positionsmessgerät mit einem Maßstab (8) und einem zugeordneten Abtastkopf (9) zum Bestimmen der Lage des Y-Laufwagens (12) auf der Querführung (5), wobei der Maßstab (8) des Y-Positionsmessgerätes an der Querführung (5) und der zugeordnete Abtastkopf (9) am Y-Laufwagen (12) befestigt ist,
- mit einem in der ersten Richtung (X) längserstreckten realen Maßstab (10), der eine reale Geradheitsspur (14) aufweist, zur Messung von Verlagerungen der Querführung (5) in der zweiten Richtung (Y) anhand eines an der Querführung (5) befestigten realen Abtastkopfes (11) zur Abtastung der Geradheitsspur (14),
**dadurch gekennzeichnet,**
- **dass** der Maßstab (8) des Y-Positionsmessgerätes mit der Querführung (5) so verbunden ist, dass er an einem Fixpunkt (15) bezüglich der zweiten Richtung (Y) fest mit der Querführung (5) verbunden ist,
- **dass** dieser Maßstab (8) des Y-Positionsmessgerätes ansonsten bezüglich der zweiten Richtung (Y) schwimmend mit der Querführung (5) verbunden ist,
- **dass** der Fixpunkt (15) so angeordnet ist, dass ein durch den Fixpunkt (15) auf die durch die erste und zweite Richtung (X, Y) aufgespannte Ebene gefälltes Lot die Geradheitsspur (14) schneidet,
- so dass eine thermische Verlagerung des Fixpunktes (15) in der zweiten Richtung (Y) durch die reale Abtastung der Geradheitsspur (14) vollständig erfasst wird.

2. Positioniereinrichtung nach Anspruch 1, **dadurch gekennzeichnet, dass** anstelle der realen Abtastung der realen Geradheitsspur (14) des realen Maßstabes (10) durch den realen Abtastkopf (11) eine virtuelle Abtastung einer virtuellen Geradheitsspur (14') auf einem virtuellen Maßstab (14') mittels eines virtuellen Abtastkopfes (11') vorgesehen ist, wobei die virtuelle Abtastung durch die Abtastung von zwei in der ersten Richtung (X) längserstreckten Maßstäben (10.1, 10.2) realisiert ist, die jeweils eine Geradheitsspur (14.1, 14.2) zur Messung von Verlagerungen (Y1, Y2) der Querführung (5) in der zweiten Richtung (Y) anhand von jeweils an der Querführung (5) befestigten Abtastköpfen (11.1, 11.2) aufweisen, wobei die thermische Verlagerung (dy) des Fixpunktes (15) als gewichtetes Mittel aus den von den beiden in der ersten Richtung (X) längserstreckten Maßstäben (10.1, 10.2) abgeleiteten Verlagerungen (y1, y2) gebildet ist.

3. Positioniereinrichtung nach Anspruch 1 oder 2, **dadurch gekennzeichnet, dass** der Maßstab (8) des Y-Messgerätes aus einem Material mit vernachlässigbarem thermischen Ausdehnungskoeffizienten besteht, beispielsweise aus Zerodur.

4. Positioniereinrichtung nach einem der vorhergehenden Ansprüche, **dadurch gekennzeichnet, dass** die Linearführungen (1.1, 1.2) und/oder die Querführung (5) Antriebe in Form von Linearmotoren enthalten.

**Claims**

1. Positioning device of portal design,

- having two parallel linear guides (1.1, 1.2) which extend in a first direction (X) and each hold an X-carriage (2.1, 2.2) in a displaceable manner in the first direction (X),
- having a transverse guide (5) which extends substantially in a second direction (Y) perpendicular to the first direction, is secured to the two X-carriages (2.1, 2.2) and holds a Y-carriage (12) in a displaceable manner in the second direction (Y),
- as a result of which a functional element (13) fastened to the Y-carriage (12) is positionable in a working region between the two linear guides (1.1, 1.2) that extend in the first direction (X),
- having at least one X-position measuring appliance having a measuring bar (3.1, 3.2, 10) and an associated sensing head (4.1, 4.2, 11) for determining the position of the transverse guide (5) in the first direction (X),
- having a Y-position measuring appliance having a measuring bar (8) and an associated sensing head (9) for determining the position of the Y-carriage (12) on the transverse guide (5), wherein the measuring bar (8) of the Y-position measuring appliance is fastened to the transverse guide (5) and the associated sensing head (9) is fastened to the Y-carriage (12),
- having a real measuring bar (10) which extends longitudinally in the first direction (X) and has a real straightness track (14) in order to measure displacements of the transverse guide (5) in the second direction (Y) by way of a real sensing head (11) fastened to the transverse guide (5) for sensing the straightness track (14),
**characterized**
- **in that** the measuring bar (8) of the Y-position measuring appliance is connected to the transverse guide (5) such that it is connected firmly to the transverse guide (5) at a fixed point (15) with regard to the second direction (Y),
- **in that** this measuring bar (8) of the Y-position measuring appliance is otherwise connected to the transverse guide (5) in a floating manner with regard to the second direction (Y),

- **in that** the fixed point (15) is arranged such that a perpendicular dropped onto the plane defined by the first and second directions (X, Y) through the fixed point (15) intersects the straightness track (14),
- such that a thermal displacement of the fixed point (15) in the second direction (Y) is detected completely by the real sensing of the straightness track (14).

2. Positioning device according to Claim 1, **characterized in that**, instead of the real sensing of the real straightness track (14) of the real measuring bar (10) by the real sensing head (11), virtual sensing of a virtual straightness track (14') on a virtual measuring bar (14') by means of a virtual sensing head (11') is provided, wherein the virtual sensing is realized by the sensing of two measuring bars (10.1, 10.2) which extend longitudinally in the first direction (X) and each have a straightness track (14.1, 14.2) for measuring displacements (Y1, Y2) of the transverse guide (5) in the second direction (Y) by way of sensing heads (11.1, 11.2) that are each fastened to the transverse guide (5), wherein the thermal displacement (dy) of the fixed point (15) is formed as a weighted average of the displacements (y1, y2) deduced from the two measuring bars (10.1, 10.2) that extend longitudinally in the first direction (X).

3. Positioning device according to Claim 1 or 2, **characterized in that** the measuring bar (8) of the Y-measuring appliance consists of a material having a negligible coefficient of thermal expansion, for example of Zerodur.

4. Positioning device according to one of the preceding claims, **characterized in that** the linear guides (1.1, 1.2) and/or the transverse guide (5) contain drives in the form of linear motors.

**Revendications**

1. Dispositif de positionnement à structure en portique :

  - doté de deux guides linéaires (1.1, 1.2) parallèles s'étendant dans une première direction (X), maintenant respectivement un chariot X (2.1, 2.2) de façon à lui permettre de se déplacer dans une première direction (X) ;
  - doté d'un guide transversal (5) s'étendant dans une deuxième direction (Y) pour l'essentiel perpendiculaire à la première direction et fixé au niveau des deux chariots X (2.1, 2.2) et maintenant un chariot Y (12) de façon à lui permettre de se déplacer dans la deuxième direction (Y) ;
  - un élément fonctionnel (13) fixé au chariot Y (12) pouvant ainsi être positionné dans une zone de travail située entre les deux guides linéaires (1.1, 1.2) s'étendant dans la première direction (X) ;
  - doté d'au moins un appareil de mesure de position X doté d'une tige de mesure (3.1. 3.2, 10) et d'une tête de balayage (4.1, 4.2, 11) associée en vue de déterminer la position du guide transversal (5) dans la première direction (X) ;
  - doté d'un appareil de mesure de position Y avec une tige de mesure (8) et une tête de balayage (9) associée en vue de déterminer la position du chariot Y (12) sur le guide transversal (5), la tige de mesure (8) de l'appareil de mesure de position Y étant fixée au guide transversal (5) et la tête de balayage (9) associée étant fixée au chariot Y (12) ;
  - doté d'une tige de mesure (10) réelle s'étendant dans la première direction (X) présentant une voie rectiligne (14) pour mesurer les déplacements du guide transversal (5) dans la deuxième direction (Y) à l'aide d'une tête de balayage (11) réelle fixée au guide transversal (5) pour balayer la voie rectiligne (14) ;

  **caractérisé en ce que** :
  - la tige de mesure (8) de l'appareil de mesure de position Y est reliée fixement au guide transversal (5) de façon à être reliée au guide transversal (5) au niveau d'un point fixe (15) par rapport à la deuxième direction (Y) ;
  - cette tige de mesure (8) de l'appareil de mesure de position Y est sinon reliée de façon flottante au guide transversal (5) par rapport à la deuxième direction (Y) :
  - le point fixe (15) est disposé de telle sorte qu'un lot tombé au travers du point fixe (15) sur le plan s'étendant entre la première et la deuxième direction (X, Y) traverse la voie rectiligne (14) ;
  - de sorte qu'un transfert de chaleur du point fixe (15) dans la deuxième direction (Y) est totalement détecté par le biais du balayage réel de la voie rectiligne (14).

2. Dispositif de positionnement selon la revendication 1, **caractérisé en ce qu'**au lieu d'un balayage réel de la voie rectiligne (14) réelle de la tige de mesure (10) réelle par la tête de balayage (11) réelle, un balayage virtuel d'une voie rectiligne (14') virtuelle sur une tige de mesure (14') virtuelle est prévu à l'aide d'une tête de balayage (11') virtuelle, le balayage virtuel étant réalisé par balayage de deux tiges de mesure (10.1, 10.2) s'étendant longitudinalement dans la première direction (X) et comportant respectivement une voie rectiligne (14.1, 14.2) servant à mesurer les déplacements (Y1, Y2) du guide transversal (5) dans la deuxième direction (Y) à l'aide de têtes de balayage (11.1, 11.2) respectivement fixées au guide transversal (5), le transfert de chaleur (dy) du point fixe (15) servant de moyen pondéré découlant des déplacements (y1, y2) déduits à partir des deux tiges de mesure (10.1, 10.2) s'étendant dans le plan longitudinal dans la première direction (X).

3. Dispositif de positionnement selon la revendication 1 ou 2, **caractérisé en ce que** la tige de mesure (8) de l'appareil de mesure Y se compose d'un matériau présentant un coefficient de dilatation thermique négligeable, par exemple le Zerodur.

4. Dispositif de positionnement selon l'une quelconque des revendications précédentes, **caractérisé en ce que** les guides linéaires (1.1, 1.2) et/ou le guide transversal (5) contiennent des entraînements prenant la forme de moteurs linéaires.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0082441 A2
- US 6949733 B2
- DE 102005023984
- DE 4212970 A1
- US 2004178327 A
- DE 102005984